# EUROPÄISCHE PATENTSCHRIFT

(11) **EP 3 521 793 B1**
(45) Veröffentlichungstag und Bekanntmachung des Hinweises auf die Patenterteilung: **05.07.2023**
(21) Anmeldenummer: 19151927.1
(22) Anmeldetag: 15.01.2019
(51) Int. Cl.: G01M 15/10, F01N 11/00, G01N 1/22, F01N 3/021, F01N 13/00, F01N 13/08

(54) **ABGASMESSANLAGE FÜR VERBRENNUNGSKRAFTMASCHINEN UND VERFAHREN ZUR ABGASBESTIMMUNG**
WASTE GAS MEASUREMENT ASSEMBLY FOR COMBUSTION ENGINES AND METHOD FOR WASTE GAS MEASUREMENT
INSTALLATION DE MESURE DES GAZ D'ÉCHAPPEMENT POUR MOTEURS À COMBUSTION INTERNE ET PROCÉDÉ DE DÉTERMINATION DES GAZ D'ÉCHAPPEMENT

(30) Priorität: 15.01.2018 DE 102018200519
(43) Veröffentlichungstag der Anmeldung: 07.08.2019
(73) Patentinhaber: AIP GmbH & Co. KG, 87490 Haldenwang (DE)
(72) Erfinder: HEUBUCH, Alexander, 87490 Haldenwang (DE); KNESTEL, Anton, 87496 Hopferbach (DE)
(74) Vertreter: MERH-IP Matias Erny Reichl Hoffmann Patentanwälte PartG mbB

(56) Entgegenhaltungen:
- DE-A1- 2 444 117
- DE-A1-102007 059 485
- DE-A1-102014 223 815
- DE-T2- 69 409 849
- US-A- 3 699 814
- US-A- 5 337 595
- US-A1- 2016 115 850

## Beschreibung

Die Erfindung betrifft eine Abgasmessanlage zur Bestimmung von Verbrennungsabgasen, insbesondere von Kraftfahrzeug-Brennkraftmaschinen, mittels einer Verdünnungsluftanlage, bei der das Abgas zur Absenkung des Taupunkts mit Umluft gemischt wird. Erfindungsgemäß kann eine Anlage realisiert werden, die eine verbesserte Bestimmung der Abgasmenge ermöglicht und einen vereinfachten Aufbau aufweist.

Fahrzeuge, insbesondere Kraftfahrzeuge mit Verbrennungsmotoren bzw. Brennkraftmaschinen oder bspw. auch stationäre Brennkraftmaschinen oder auf dem Prüfstand befindliche Brennkraftmaschinen für Kraftfahrzeuge sind im Schadstoffausstoß reglementiert. Die Schadstoffgrenze ist in Gramm oder Milligramm pro Fahrstrecke (oder Kilowattstunde) reglementiert. Die entsprechende Last für das Fahrzeug wird durch sogenannte Rollenprüfstände simuliert, d.h. die Räder drehen auf dem Rollenprüfstand während die Karosserie steht. Es können jedoch auch Motorprüfstände verwendet werden. Die Abgasanlage des Fahrzeugs wird gasdicht an die Probenahme angeschlossen. Das Probenahmesystem bedient sich der CVS-Anlage, wobei Luft mit dem Abgasstrom vermischt wird.

In der EP 3 141 882 ist eine Anlage beschrieben, die einen einzigen Abgaseinlass aufweist. Es sind Maßnahmen beschrieben, die sicherstellen sollen, dass bei modernen Fahrzeugen das richtige Abgasmischverhältnis sichergestellt werden kann.

Zudem ist die DE 694 09 849 T 2 zu nennen, in welcher eine Vorrichtung gleichermaßen ein einziger Abgaseinlass in einem Eingangsabschnitt besitzt. Insbesondere enthält diese Vorrichtung eine Bypass-Leitung, welche ermöglicht das vermischte Gas nach einem bestimmten Volumendurchfluss umzuleiten oder zu korrigieren.

Ferner ist in der DE 24 44 117 A1 eine Anlage beschrieben, die eine kontinuierliche Messung der Abgaswerte priorisiert. Hierbei beinhaltet die Anlage ein Paar aus Wirkdruckgeber und Druckaufnehmer, welche konfiguriert sind die zur Mischung des Abgases vorgesehene Luftvolumenrate zu detektieren und entsprechend den Abgasvolumenraten zu ändern.

Die US 10 428 715 B2 beschreibt hingegen ein Gasanalysesystem, welches eine mit einem Partikelfilter versehene Hauptflusspassage und eine nachgeschaltete Probenentnahmen-Flusspassage für das gemischte Abgas besitzt. Durch einen zusätzlichen Abgasflussratenadjustierungsmechanismus lassen sich die Flussraten des vermischten Abgases und der Luft dabei so einstellen, dass die ursprüngliche Abgasflussrate und die Flussrate des abgezweigten Abgases ein konstantes Verhältnis besitzen.

Die US 5 337 595 A beschreibt wiederum eine Anlage zur Evaluierung von Abgasemissionen auf Grundlage von isokinetischen Unterschallventuridüsen. Insbesondere werden zwei kalibrierte Unterschallventuridrüsen genutzt, um die Flussraten des gemischten Abgases innerhalb eines Entnahmerohrs und eines Hauptflussrohrs anzugleichen.

Darüber hinaus zeigt die DE 10 2014 223 815 A1 eine Abgasmessanlage, die mittels zugeschalteter Verdünnungsluftanlage den Taupunkt des vermischten Abgases kontrolliert, wobei insbesondere ein Wärmetauscher vorgesehen ist, der die zusätzliche Wärme des Abgases nutzt und zum Vorheizen der neu eingespeisten Luft zuführt.

Zuletzt sei auch die Lösungsvorrichtung der DE 10 2007 059 485 A1 genannt, in welcher über eine erste, innere poröse Leitung ein Lösungsfluss (Luft) mit einem durch eine zweite, äußere poröse Leitung zugeführten Abgasfluss vermischt wird. Durch eine weitere, um die zweite poröse Leitung bestehende Kammer kann so eine homogene Verdünnung des Abgases erreicht werden.

Eine Aufgabe der Erfindung ist es eine Anlage zur Entnahme von Abgasproben sowie ein Verfahren zur Abgasbestimmung, insbesondere von Kraftfahrzeug-Brennkraftmaschinen, zu schaffen, die eine verbesserte Bestimmung der vom Fahrzeug abgegebenen Gasmenge erlaubt.

Diese Aufgabe wird mit Hilfe einer Anlage nach Anspruch 1 und einem Verfahren nach Anspruch 8 gelöst. Erfindungsgemäß weist eine Anlage zur Entnahme von Abgasproben, insbesondere von Kraftfahrzeug-Brennkraftmaschinen, mittels einer Verdünnungsluftanlage bei der Abgas mit Verdünnungsluft gemischt wird, wobei die Anlage eine Constant Volume Sampling-Anlage ist, umfassend:- einen Tunnel der von Fluid durchströmbar ist, wobei der Tunnel ein Verdünnungstunnel ist;- ein Gasfördermittel zur Erzeugung eines Fluidstroms im Tunnel;- eine Abgaseinleitung zur Zufuhr von Abgas; und- eine Venturidüse welche mit kritischer Strömung eingesetzt wird, zum Einstellen eines konstanten Gesamtvolumenstroms, wobei sich der konstante Gesamtvolumenstrom aus der Addition des Volumenstroms der Verdünnungsluft und des Volumenstroms des Abgases ergibt; wobei die Anlage wobei eine Messstelle, zur Ermittlung des Volumenstroms der zugeführten Verdünnungsluft, stromauf der Abgaseinleitung vorgesehen ist, und ein Bestimmungsmittel vorgesehen ist, welches dazu eingerichtet ist die zugeführte Abgasmenge aus dem durch die Venturidüse konstant gehaltenen Gesamtvolumenstrom abzüglich des an der Messstelle ermittelten zugeführten Verdünnungsluftstroms zu bestimmen, wobei die Venturidüse stromauf des Gasfördermittels angeordnet ist; und ein erstes Strömungselement stromaufwärts der Venturidüse und stromaufwärts der Abgaseinleitung an der Messstelle angeordnet ist; und die Messstelle Drucksensoren zur Bestimmung des Differenzdrucks vor und nach dem ersten Strömungselement aufweist. Die Messstelle kann zudem einen Durchflusssensor umfassen.

Durch diese Ausgestaltung, durch Bereitstellung der Messstelle stromauf der Abgaseinleitung und durch Verwendung einer Anlage in einer Constant Volume Sampling-Ausführung, welche einen (im Betrieb) konstanten Gesamtvolumenstrom aufweist, ist es möglich, den Abgasvolumenstrom zu bestimmen. D.h, ergibt sich aus dem konstanten Gesamtvolumenstrom und dem zugeführten Verdünnungsluftstrom der zu ermittelnde Abgasstrom. Da eine direkte Messung des Abgasstroms beispielsweise in den Abgaszufuhreinleitungen stets die Schwierigkeit aufweist, dass sehr hohe Temperatureinflüsse vorliegen und dadurch die Ermittlung des Abgasmassenstroms erschwert wird, ist es durch die erfindungsgemäße Ausgestaltung, durch Bereitstellung der charakteristischen Messstelle und Verwendung der Constant Volume Sampling-Anlage möglich, über die Bestimmung des Volumenstroms und/oder Massenstroms der zugeführten Verdünnungsluft sowie des Gesamtvolumenstroms oder Gesamtmassenstroms den Abgasstrom zu berechnen. Der vorgeschlagene Aufbau ermöglicht somit ein einfaches und sehr präzises Ermitteln des Abgasmassenstroms und/oder Volumenstroms.

Bei einer Constant Volume Sampling-Anlage (CVS-Anlage) werden kritische Venturi-Rohre verwendet und über ein Gebläse wird ein Unterdruck erzeugt, damit in der Venturi-Düse ein kritisches Strömungsverhältnis vorliegt. Dadurch kann sich eine konstante Gesamtvolumenströmung ergeben.

Bevorzugt kann das erste Strömungselement direkt an der Messstelle vorgesehen sein, dass derart ausgestaltet ist, dass dieses von Gas, bevorzugt von der Verdünnungsluft, (vollständig) laminar durchströmbar ist. Dadurch kann im Betrieb der Anlage, im ersten Strömungselement, eine laminare Strömung vorliegen. Besonders bevorzugt liegt im ersten Strömungselement durchgängig eine laminare Strömung (im Betrieb der Anlage) vor. Das Gasfördermittel kann von einer Steuereinheit bevorzugt derart angesteuert werden, dass im ersten Strömungselement nur eine laminare Strömung vorliegt.

Bevorzugt kann aus dem ermittelten Volumenstrom der Verdünnungsluft und einer Temperatur und eines Drucks der zugeführten Verdünnungsluft auch ein Massenstrom ermittelt werden.

Bevorzugt ist die Messstelle mit dem Durchflusssensor stromauf der Abgaseinleitung und stromab eines Filters zum Filtern der Verdünnungsluft angeordnet. Bevorzugt wird der Filter zum Filtern der Verdünnungsluft als Laminar Flow Element des Durchflusssensors der Messstelle verwendet sodass die Messstelle am Filter angeordnet ist.

Bevorzugt kann das erste Strömungselement direkt im Tunnel angeordnet sein. Weiter bevorzugt ist das Strömungselement direkt der zugeführten Verdünnungsluft ausgesetzt.

Die Anlage kann zudem eine Messstelle aufweisen, die ausschließlich von Verdünnungsluft durchströmt wird. Durch diese charakteristische Anordnung der Messstelle derart, dass diese ausschließlich von Verdünnungsluft durchströmt wird, ist es möglich die Temperatureinflüsse des Abgasstroms weiter zu reduzieren, um eine präzise und einfache Ermittlung der abgegebenen Gasmenge des Fahrzeugs zu bestimmen.

Vorteilhaft kann an der Messstelle auch der Massenstrom der zugeführten Verdünnungsluft und/oder der Volumenstrom ermittelt werden.

Die Anlage kann vorteilhaft eine Abgaseinleitung aufweisen, welche direkt in den Tunnel erfolgt. Entsprechend ist die Messstelle stromauf, also vor dieser Abgaseinleitung in den Tunnel, angeordnet. Somit wird ein einfacher Aufbau bereitgestellt, welcher eine hohe Messgenauigkeit zulässt.

Im Tunnel kann ein Mischbereich vorliegen, in dem die Verdünnungsluft mit Abgas vermischbar ist, so dass die Verdünnungsluft erst im Tunnel mit dem Abgas vermischbar ist. Die Abgaseinleitung kann dabei direkt in den Tunnel erfolgen. Der Aufbau der Anlage wird daher noch weiter vereinfacht und die Ermittlung der vom Fahrzeug abgegebenen Gasmenge kann weiter erleichtert werden.

Die Messstelle ist zur Ermittlung des Volumenstroms der zugeführten Verdünnungsluft stromauf der Abgaszufuhr entlang des Verdünnungsluftstroms vorgesehen. Die zugeführte Abgasmenge wird dabei aus dem ermittelten Volumenstrom der Verdünnungsluft und dem konstanten Gesamtvolumenstrom bestimmt. Nach Hagen - Poiseuille ist der Durchfluss durch gerade Rohre bei laminarer Durchströmung mit Fluiden proportional zum Druckabfall und umgekehrt proportional zur Viskosität des strömenden Mediums. Zur Erzeugung eines bestimmten aktuellen Volumenstroms durch das erste Strömungselement mit laminarer Strömung ist eine Druckdifferenz zwischen Eingang und Ausgang des ersten Strömungselements nötig, welche als Antriebskraft proportional zur Größe des mittleren Volumenstroms ist.

Das Gasfördermittel erzeugt im Betrieb einen Druck oder Unterdruck, so dass in der Venturi-Düse ein kritisches Strömungsverhältnis vorliegt, zur Ausbildung der CVS-Anlage.

Vorteilhaft kann als erstes Strömungselement ein erster Filter vorgesehen sein, der stromaufwärts der Abgaseinleitung angeordnet ist. Zudem kann zumindest ein Temperatursensor im Bereich (oder bevorzugt am ersten Filter) des ersten Filters angeordnet sein. Durch diese Ausgestaltung kann eine vorteilhafte Messstelle ausgebildet werden. Allgemein kann der erste Filter jedoch auch als Luftflusselement oder Laminarflusselement ausgebildet sein. Mit anderen Worten kann ein sog. Strömungselement stromaufwärts der Abgaseinleitung im Tunnel oder vor dem Tunnel angeordnet sein. Bevorzugt ist dieses Strömungselement ein Linearisierungselement zum Erzeugen einer laminaren Strömung. Durch dieses Strömungselement wird eine einfache Durchflussmessung von Gasen ermöglicht.

Bevorzugt ist das erste Strömungselement derart ausgestaltet, dass dieses von Gas, bevorzugt von der Verdünnungsluft, laminar durchströmbar ist, so dass im Betrieb der Anlage im ersten Strömungselement laminare Strömung vorliegt, wobei bevorzugt das erste Strömungselement im Tunnel (oder auch Verdünnungstunnel) angeordnet ist.

Bevorzugt kann das Bestimmungsmittel eine Recheneinheit umfassen, zum Ermitteln der zugeführten Abgasmenge. Bevorzugt können zur Bestimmung der zugeführten Abgasmenge durch das Bestimmungsmittel, auch lediglich die Messwerte an der Messstelle und ein voreinstellbarer Gesamtvolumenstrom verwendet werden.

Bevorzugt kann das erste Strömungselement ein Kapillarrohrbündel sein und/oder eine Stahlmatrix und/oder Wabenmatrix.

Der Körper des ersten Strömungselements kann eine Geometrie aufweisen, die derart ausgestaltet ist, dass das durchströmende Gas im Betrieb der Anlage eine Reynolds-Zahl von 2300 nicht übersteigt. Durch diese vorteilhafte Ausgestaltung ist es möglich, eine laminare Durchströmung des Strömungselements zu gewährleisten, um eine hohe Messgenauigkeit zu erreichen. Es kann daher ein durchströmbarer Filterkörper des ersten Strömungselements vorgesehen sein der eine Geometrie aufweist, sodass die Reynolds-Zahl des durchströmenden Gases durch den Filterkörper im Betrieb der Anlage 2300 nicht übersteigt.

Das erste Strömungselement kann vorteilhaft ein Laminar Flow-Element (LFE) sein.

Zudem können Konditionierungsmittel vorgesehen sein, um die Gastemperatur in der Venturi-Düse konstant zu halten. Dies hat den Vorteil, dass aus dem konstanten Volumenstrom ein konstanter Gasmassenstrom ermittelt werden kann. Konditionierungsmittel können dabei insbesondere Wärmetauscher sein. Das Konditionierungsmittel kann ein Wärmeübertrager zur Einregelung einer definierten Gastemperatur sein. Über den Wärmeübertrager kann der Gasstrom sowohl gekühlt wie auch beheizt werden.

An der Messstelle kann ein Laminar Flow-Element zur Bestimmung des Volumenstroms der zugeführten Verdünnungsluft vorgesehen sein.

Vorteilhaft können die Gasfördermittel derart angesteuert werden, dass der Druckunterschied an der Mischstelle zwischen dem zugeführten Abgas und der zugeführten Verdünnungsluft zur Umgebung nicht größer als +/- 2,5 mbar und bevorzugt 0 mbar beträgt, wobei der Druckunterschied basierend auf den Messwerten der Messstelle bestimmt werden kann.

Die Abgaseinleitung kann vorteilhaft derart angeordnet sein, dass die Mischung des Abgasstroms mit der Verdünnungsluft im Tunnel stattfindet. Dies hat eine erhöhte Messgenauigkeit der Partikel- und/oder Gasmessung zur Folge.

Die Messstelle kann zumindest teilweise im Tunnel angeordnet sein. Bevorzugt kann eine zweite Messstelle vorgesehen sein, welche stromab der Abgaseinleitung vorgesehen ist, zur Bestimmung des Gasdrucks des Gemischs aus Verdünnungsluft und Abgas.

Die Abgaseinleitung kann direkt in den Tunnel erfolgen, so dass mit der Anlage Abgase von Ottomotoren als auch Dieselmotoren gemessen werden können.

Die Messstelle kann ein Laminarelement (Laminarflow-Element) umfassen, das vor dem Tunnel angeordnet ist und wobei ein Sensor zur Erfassung mindestens eines Parameters der zugeführten Verdünnungsluft vorgesehen sein kann. Weiter bevorzugt kann ein erster Drucksensor stromauf des Laminarelements und ein zweiter Drucksensor stromab des Laminarelements angeordnet sein.

Vorteilhaft kann das erste Strömungselement ein Luftfilter sein, der im Bereich der Zufuhr der Verdünnungsluft zur Filterung dieser Verdünnungsluft angeordnet ist. Durch diese Anordnung wird der Synergieeffekt erreicht, dass sowohl die Filterung der Verdünnungsluft als auch die Messung der Verdünnungsluft durch das Strömungselement und die daran angeordnete Messstelle erreicht werden kann. Bevorzugt ist zudem lediglich dieses eine erste Strömungselement vorgesehen und kein weiteres Strömungselement (LFE oder Filter) stromauf der Abgaseinleitung.

Ein Verdünnungsluftfilter kann an einer Verdünnungslufteinleitung der Anlage vorgesehen sein und die Messstelle kann im Bereich des Verdünnungsluftfilters angeordnet sein oder stromab des Verdünnungsluftfilters. Das erste Strömungselement kann dabei der Verdünnungsluftfilter sein, welcher eine laminare Durchströmung aufweist. Vorteilhaft kann die Messstelle stromauf des Tunnels angeordnet sein.

Vorteilhaft kann eine Steuereinheit vorgesehen sein, welche dazu eingerichtet ist, den zugeführten Abgasmassenstrom aus dem konstanten Gesamtvolumenstrom abzüglich des an der Messstelle ermittelten zugeführten Verdünnungsluftstroms zu bestimmen. Zur Umrechnung des Volumenstroms auf den Massenstrom kann die Kontinuitätsgleichung (Massenerhaltung) und die Dichteumrechnung entsprechend dem Gesetz der Thermodynamik angewendet werden.

Die Messstelle kann einen Durchflusssensor aufweisen. Bevorzugt ist dieser Durchflusssensor ein Laminar Flow-Element, welches im Verdünnungsluftstrom angeordnet ist und wobei an der Messstelle zumindest ein Druck und eine Temperatur messbar ist. An der Messstelle kann ein Durchflusssensor zur Bestimmung der zugeführten Verdünnungsluft angeordnet sein.

Vorteilhaft können mehrere Venturi-Düsen vorgesehen sein, welche zur Einstellung eines bestimmten konstanten Massenstroms einzeln oder gemeinsam an dem Tunnel nachgeschaltet werden.

Vorteilhaft kann eine zweite Abgaseinleitung direkt in den Tunnel vorgesehen sein, zur Erleichterung der Messung bei verschiedenen Fahrzeugen nacheinander.

An der Messstelle kann vorteilhaft ein Feuchtigkeitssensor zur Bestimmung der Luftfeuchtigkeit der Verdünnungsluft vorgesehen sein. Vorteilhaft ist das Gasfördermittel eine Pumpe oder ein Blower, wobei das Venturi-Rohr stromauf vom Gasfördermittel vorgesehen ist. Vorteilhaft kann der Durchflussmesser zur Differenzdruckmessung an der Ein- und Ausgangsseite des ersten Strömungselements oder des Laminar Flow-Elements eingerichtet sein, zur Bestimmung eines Volumenstroms und/oder Massenstroms.

Vorteilhaft kann der Durchflusssensor einen Temperatursensor (und bevorzugt einen Drucksensor und/oder Absolutdrucksensor) an der Eingangsseite und/oder Ausgangsseite umfassen.

Weiter bevorzugt kann eine automatisierte Durchflussregelung vorgesehen sein, mit einer kritisch durchströmbaren Venturi-Düse zur Einstellung des Volumenstroms durch den Tunnel, wobei eine Steuereinheit basierend auf dem ermittelten Volumenstrom der Messstelle das Gasfördermittel steuert.

Das erste Strömungselement kann stromauf der Abgaseinleitung und stromab eines Gasfördermittels der Abgasmessanlage angeordnet sein, und wobei ein zweites Strömungselement vorgesehen ist, welches stromauf des ersten Strömungselements und stromab des Gasfördermittels angeordnet ist. Bevorzugt ist das zweite Strömungselement ein Laminar Flow-Element und das erste Strömungselement ein Luftfilter.

Vorteilhaft kann ein zweites Gasfördermittel vorgesehen sein zur Erhöhung und verbesserten Steuerung des Gesamtvolumenstroms. Bevorzugt ist das erste Gasfördermittel stromauf vom Tunnel angeordnet und das zweite Gasfördermittel stromab der Venturi-Düse angeordnet.

Weiter vorteilhaft kann eine Multidüse als Venturi-Düse vorgesehen sein, wobei die Multidüse derart ausgestaltet sein kann, dass mehrere Düsen, welche bevorzugt unterschiedliche Durchmesser aufweisen, an einer gemeinsamen Platte vorgesehen sind.

Eine Vorrichtung zur Bestimmung der zugeführten Abgasmenge für eine Anlage zur Entnahme von Abgasproben einer Verbrennungskraftmaschine, wobei die Anlage eine Constant Volume Sampling-Anlage mit konstantem Gesamtvolumenstrom ist, die einen Tunnel aufweist, kann eine Messstelle aufweisen. Die Messstelle kann zur Ermittlung des Massenstroms der zugeführten Verdünnungsluft stromauf von einer Abgaszufuhr in den Tunnel vorgesehen sein. Ein Mittel kann vorgesehen sein zur Bestimmung der zugeführten Abgasmenge aus dem ermittelten Massenstrom der Verdünnungsluft und dem konstanten Gasgesamtvolumenstrom im Tunnel.

Eine vorteilhafte Abgasmessanlage zur Bestimmung von Abgasen, insbesondere von Kraftfahrzeugen, mittels einer Verdünnungsluftanlage kann einen Tunnel mit einer Abgaseinleitung zur Zuführung von Abgas aufweisen, wobei die Abgasmessanlage ein Gasfördermittel aufweist. Die Abgasmessanlage kann einen Durchflusssensor zur Ermittlung des Durchflusses der zugeführten Verdünnungsluft stromauf der Abgaseinleitung aufweisen. Zudem kann ein Gasfördermittel abhängig vom ermittelten Durchfluss derart gesteuert werden, dass der Druckunterschied zwischen zugeführtem Abgas und zugeführter Verdünnungsluft nicht größer als ein vorbestimmter Wert ist.

Ein Verfahren zur Bestimmung einer Abgasmenge, welche einer Anlage zur Entnahme von Abgasproben nach einem der oben genannten Merkmale zugeführt wird, umfasst die wie im Anspruch 8 offenbarten Schritte.

Ein Rollenprüfstand, Motorprüfstand oder Antriebsstrangprüfstand) weist vorteilhaft eine Anlage zur Entnahme von Abgasproben nach einem der oben genannten Merkmale auf.

Vorteilhafte Ausgestaltungen und weitere Details der vorliegenden Erfindung werden im Folgenden anhand der verschiedenen Beispiele mit Bezug auf die schematischen Figuren beschrieben. In den Zeichnungen wird die Erfindung näher erläutert.

Es zeigen:
- **Figur 1:**: zeigt eine erste Ausführungsform der Abgasmessanlage;
- **Figur 2:**: zeigt eine Weiterbildung der ersten Ausführungsform.

Im Folgenden werden verschiedene Beispiele detailliert unter Bezugnahme auf die Figuren beschrieben. Gleiche bzw. ähnliche Elemente in den Figuren werden mit gleichen Bezugszeichen bezeichnet. Die vorliegende Vorrichtung ist jedoch nicht auf die beschriebenen Kombinationen von Merkmalen begrenzt. Vielmehr sollen auch weitere Modifikationen und Kombinationen von der Offenbarung und den unabhängigen Ansprüchen umfasst sein.

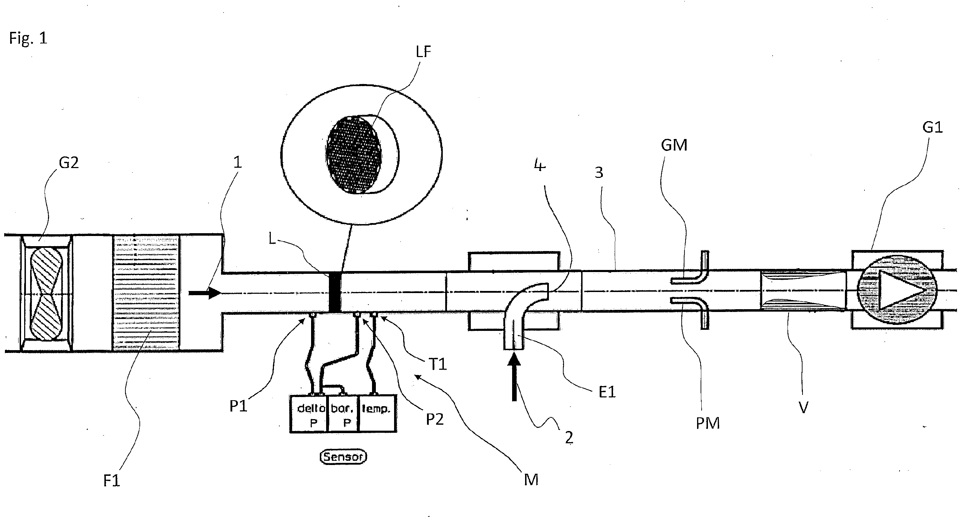

In Figur 1 ist eine Abgasmessanlage zur Messung von Verbrennungsabgasen eines Kraftfahrzeugs, eines Antriebsstranges oder Motors dargestellt. Die im Betrieb des Kraftfahrzeugs entstehenden Abgase werden über ein Abgasrohr über die Abgaseinleitung E1 in einen Tunnel 3 (Verdünnungstunnel) geleitet. Stromab der Abgaseinleitung E1 befindet sich beispielsweise eine Partikelmesssonde PM sowie eine Gasmesssonde GM, welche alternativ oder gemeinsam vorgesehen sein können. An diesen Probenahmestellen wird die Abgasprobe entnommen und einem oder mehreren Abgasbeuteln und/oder Messinstrumenten zugeführt.

Stromab der Partikelmessung und Gasmessung ist die Venturi-Düse V vorgesehen, welche durch das Abgasluftgemisch durchströmt wird. Weiter stromabwärts ist das Gasfördermittel G1 vorgesehen, welches beispielsweise eine Pumpe, ein Ventilator oder ein Blower ist. Über dieses Gasfördermittel G1 wird ein Unterdruck erzeugt, welcher das gemischte Gas aus dem Tunnel 3 durch die Venturi-Düse V hindurchfördert. Die Strömung in der Venturi-Düse V entspricht einem kritischen Strömungsverhältnis, so dass sich eine konstante Gasvolumenströmung ergibt. Dadurch wird eine Constant Volume Sampling-Anlage ausgebildet.

Stromauf der Abgaseinleitung E1 ist die Messstelle M vorgesehen zur Bestimmung des Durchflusses der zugeführten Verdünnungsluft. Die zugeführte Verdünnungsluft wird zum Vermischen mit dem zugeführten Abgas verwendet wobei bevorzugt diese Vermischung an (stromab) der Abgaseinleitung E1 stattfindet. Zur Vermeidung von Wasserkondensation wird das Verdünnungsverhältnis von Abgas zu Verdünnungsluft entsprechend gewählt.

Bevorzugt wird (direkt) an der Messstelle M ein Laminar Flow-Element (LFE) (oder Luftfilter) verwendet, wobei ein erster Drucksensor P1 und ein zweiter Drucksensor P2 vorgesehen sind, welche den Druck jeweils vor und nach dem Laminar Flow-Element messen. Zudem ist ein Temperatursensor T1 vorgesehen zur Messung der Gastemperatur.

Das Laminar Flow-Element (oder ein entsprechender Luftfilter) ist ein Messinstrument für den aktuellen Volumenstrom. Dabei wird das Prinzip von Hagen-Poiseuille ausgenutzt, um den Durchfluss durch das Rohr, in dem das Laminar Flow-Element angeordnet ist, zu bestimmen. Nach Hagen-Poiseuille ist der Durchfluss durch das gerade Rohr bei laminarer Durchströmung mit Flüssigkeiten und Gasen proportional zum Druckabfall über das Element und umgekehrt proportional zur Viskosität des strömenden Mediums. Zur Erzeugung eines bestimmten Volumenstroms durch das Laminar Flow-Element ist somit eine Druckdifferenz zwischen Eingangs- und Ausgangsseite erforderlich. Diese ist proportional zur Größe des mittleren Volumenstroms. Je größer der Volumenstrom, desto größer muss die wirkende Druckdifferenz sein. Die laminare Strömung in einem dünnen Rohr ist somit proportional zum Druckverlust pro Längeneinheit. Die mechanische Dimension der parallel geschalteten Kapillaren des Laminar Flow-Elements ist konstruktiv so gewählt, dass die Reynolds-Zahl im laminaren Bereich bleibt.

Die Kalibrierung des Laminar Flow Elements bestimmt die Proportionalitätskonstante zwischen dem aktuellen Volumenstrom und dem Differenzdruck am Laminar Flow Element. Diese Konstante beinhaltet Fertigungstoleranzen und spezifische Daten wie Durchmesser, Länge und Anzahl der Rohre des Laminar Flow elements.

Vorteilhaft wird ein Laminar Flow-Element mit schnellem Ansprechverhalten und geringem Druckverlust (von < 0,7 mbar bei Nenndurchfluss) verwendet. Durch die erfindungsgemäße Ausgestaltung ist es möglich, eine schnelle Ansprechzeit durch Messung des Wirk- oder Differenzdrucks zu ermitteln und somit eine präzise und schnelle Aussage über den Durchfluss zu erhalten.

Zur Messung des Druckabfalls wird ein Differenzdruckmessgerät verwendet. Das Laminar Flow-Element kann zahlreiche Kanäle mit geringem Querschnitt aufweisen, durch die ein Gas strömen kann. Das Verhältnis von Volumenstrom und Druckabfall ist bis zu einem bestimmten Volumenstrom nahezu linear. Im Laminar Flow-Element kann zudem eine Siebanordnung vorgesehen sein mit einem Konus, der vorgelagert ist, so dass die Strömung gleichmäßig wird, um den Strömungsquerschnitt auszufüllen. Daher ist (bevorzugt aber nicht zwingend) dem Laminar Flow-Element ein Konus im Strömungskanal vorgelagert.

Eine weitere Ausgestaltung ermöglicht die Messung des Durchflusses an der Messstelle M durch einen Ultraschall-Durchflussmesser. Für eine akustische Strömungsmessung mittels Ultraschall kann dabei das Ultraschall-Doppler-Verfahren und Ultraschall-Laufzeitverfahren verwendet werden.

Wie in Figur 1 dargestellt, ist die Messstelle M zur Bestimmung des Durchflusses vorgesehen, wobei die Verdünnungsluft 1 in den Tunnel 3 durch den Filter F1 zugeführt wird. In dem beschriebenen System gilt die CVS-Bedingung: Abgasvolumenstrom (2) + Verdünnungsluftvolumenstrom (1) = konstant.

In CVS-Systemen ergibt sich daher der Vorteil, dass die Ermittlung des Abgasvolumenstroms während eines Tests nicht erforderlich ist. Ändert sich bei einem CVS-System das Verdünnungsverhältnis im Verdünnungstunnel, da beispielsweise der Abgasvolumenstrom kontinuierlich in einem Testzyklus verändert wird, so bleibt der Gesamtvolumenstrom dennoch konstant.

Zusätzlich zum Gasfördermittel G1 ist bevorzugt, wie in Figur 1 dargestellt, das Gasfördermittel G2 vorgesehen. Dieses Gasfördermittel G2 kann zusätzlich zu dem ersten Gasfördermittel G1 vorgesehen sein und kann dazu dienen den Druck an der Mischstelle (4) zur Umgebung von kleiner oder gleich +/- 2,5 mbar - und von bevorzugt im wesentlichen 0 mbar - einzuhalten um bspw. Strömungsverluste durch den Filter F1, laminare Strömungsverluste, Messmittelverluste und/oder sonstige bauliche Strömungsverluste zu minimieren bzw. zu eliminieren. Hierbei wird auf die Mischstelle (4) zwischen dem zugeführten Abgas und der zugeführten Verdünnungsluft bezug genommen. Die Verdünnungsluft 1 wird durch den Filter F1 in den Tunnel 3 zugeführt und durchströmt das Linearisierungselement LF des Laminar Flow-Elements L, wobei vor dem Laminar Flow-Element eine Druckmessung über den Drucksensor P1 erfolgt und stromabwärts des Laminar Flow-Elements L eine weitere Druckmessung über den Drucksensor P2 erfolgt. Zudem erfolgt eine Temperaturmessung über den Temperatursensor T1. Durch die thermischen Zustandsgleichungen können daher die weiteren Parameter der Verdünnungsluft errechnet werden. Der Volumenstrom durch die Venturi-Düse V kann durch beispielsweise einen Flow-Computer berechnet werden. Dieser Flow-Computer berechnet den Volumenstrom durch die Venturi-Düse, wobei hierzu die gemessene Temperatur und der Druck sowie die Düsenkonstante berücksichtigt werden. Die zeitliche Integration des erfassten Volumenstroms ergibt dann das Volumen.

Als Gasfördermittel G1 kann beispielsweise auch ein Gebläse verwendet werden, welches über einen Elektromotor angetrieben wird, der wiederum über einen Frequenz-Umrichter gesteuert wird. Dies stellt eine kostengünstige und technisch einfache Lösung dar.

Die Venturi-Düse V wird mit kritischer Strömung verwendet zum Einstellen des Durchflusses. Dabei ist es zudem möglich, anstatt lediglich einer einzigen Venturi-Düse V, mehrere Venturi-Düsen parallel anzuordnen, um den gewünschten Volumenstrom einzustellen.

Das Laminar Flow-Element kann ein Kapillarrohrbündel und/oder eine Stahlmatrix und/oder eine Wabenmatrix und/oder ein Filterelement umfassen zur Linearisierung der Strömung, so dass eine laminare Strömung vorliegt. Im Betrieb der Messanlage liegt somit im Bereich der Messstelle M auch eine laminare Strömung vor. Der Filterkörper des Laminar Flow-Elements weist eine Geometrie auf, so dass die Reynolds-Zahl des durchströmten Gases 2.300 nicht übersteigt.

Die Verwendung einer CVS-Anlage hat den Vorteil, dass der Taupunkt des Abgasluftgemisches sinkt und die Analysatoren weitestgehend kalt betrieben werden können. Durch die CVS-Anlage wird gewährleistet, dass ein konstanter Gasstrom durch die Anlage geleitet wird. Wenn beispielsweise durch eine höhere Last des Fahrzeugs der Abgasstrom steigt, sinkt im gleichen Maße der Verdünnungsluftstrom, so dass die Summe beider gleich bleibt.

Durch geeignete Konditionierungsmittel wird die Temperatur durch die CVS-Venturi-Düse V konstant gehalten, wo aus einem konstanten Volumenstrom ein konstanter Gasmassenstrom wird.

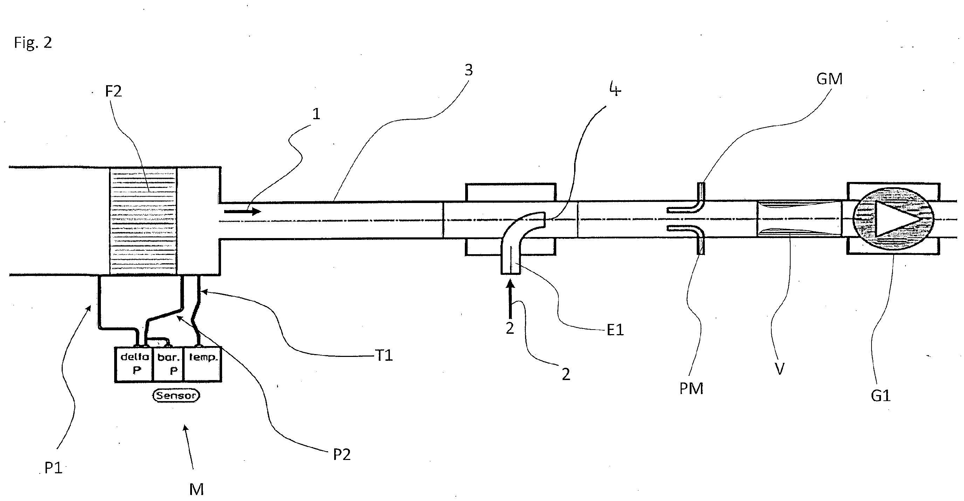

Wenn nun die entsprechende Analyse die Gasbestandteile in Volumenprozent angibt, können die gesamten Gasbestandteile auf das große, konstante Volumen hochgerechnet werden und über die gefahrene Strecke auf dem Rollenprüfstand in Gramm pro Kilometer umgerechnet werden. Die Anlage gemäß Figuren 1 und 2 kann somit bevorzugt an einem Rollenprüfstand verwendet werden.

Um die von einem Fahrzeug abgegebene Gasmenge zu bestimmen, kann die sogenannte EFM (Exhaust Flow Meter)-Methode, oder entsprechende UltraschallSensoren verwendet werden. Die Schwierigkeit hierbei ist, dass der Abgasstrom sehr hohen Temperatureinflüssen unterliegt. Deswegen wird erfindungsgemäß vorgeschlagen, die Verdünnungsluft zu messen (an der Messstelle M welche zwischen Abgaseinleitung E1 und Verdünnungsluftzufuhr liegt). Von dem konstanten CVS-Volumenstrom wird nun der Verdünnungsluftstrom abgezogen, das Ergebnis ist der Abgasmassenstrom.

Für ein Verfahren zur Messung des Abgasmassenstroms wird somit zunächst der konstante CVS-Volumenstrom bestimmt. Über die Messung am Messpunkt M kann der Verdünnungsluftstrom ermittelt werden. Um nun den Abgasmassenstrom zu ermitteln, wird vom konstanten CVS-Volumenstrom der ermittelte Verdünnungsluftstrom abgezogen.

Zusätzlich kann an der Messstelle M ein Sensor zur Messung der Feuchte des Gases vorgesehen sein, um die Messgenauigkeit weiter zu erhöhen. Wie in Figur 1 dargestellt ist, ist die Messstelle M im Tunnel 3 angeordnet. Auch der erste Drucksensor P1 und der zweite Drucksensor P2 sowie der Temperatursensor T1 sind direkt am Tunnel 3 an der Messstelle M im Bereich des Laminar Flow-Elements L angeordnet. Die Messstelle M ist somit stromauf von der Abgaseinleitung E1, in der das Abgas 2 in den Tunnel 3 eingeleitet wird und bevorzugt stromab vom Gasfördermittel G2 einer Verdünnungsluft-Zufuhröffnung.

Bevorzugt wird das Gasfördermittel G2 sofern erforderlich derart angesteuert, dass der Druckunterschied zwischen der Mischstelle (4) der angesaugten Verdünnungsluft 1 und dem zugeführten Abgas 2 und der Umgebung nur einen sehr geringen Druckunterschied aufweisen. Insbesondere kann das Gasfördermittel G2 derart eingestellt werden, dass der Druckunterschied an der Mischstelle (4) zur Umgebung ≤ +/- 2,5 mbar beträgt. Bevorzugt wird der Druckunterschied auf im wesentlichen 0 mbar eingestellt. Dazu können entsprechende Drucksensoren im Bereich der Abgaseinleitung E1 vorgesehen sein, um die Druckdifferenz entsprechend zu ermitteln. Die Venturi-Düse V mit kritischer Strömung kann in die Rohrleitung über eine Flanschverbindung eingebaut werden.

Das Laminar Flow-Element L (und bevorzugt die Messstelle M) ist stromaufwärts der Abgaseinleitung E1 sowie stromabwärts vom Endstück des Tunnels 3 bzw. vom Tunnelanfang (bzw. des Luftfilters) angeordnet. Das LFE kann somit im Tunnel 3 gemeinsam mit der Messstelle M angeordnet sein. Die in Figur 1 und Figur 2 dargestellte Anlage kann in einem Rollenprüfstand zur Fahrzeugzertifizierung verwendet werden.

In Figur 2 ist eine weitere Ausführungsform dargestellt. Die Anlage der Figur 2 weist den Filter F2 auf, welcher an der Messstelle M angeordnet ist. Statt des Laminarelements L und des Filters F1 gemäß Figur 1 wird für die Ausführungsform der Figur 2 der Filter F2 verwendet. Der Filter F2 bildet somit gleichzeitig sowohl das Filterelement für die Zufuhr der Verdünnungsluft als auch das Laminarelement der Messstelle M zur Bestimmung des Durchflusses. Der erste und der zweite Drucksensor sind jeweils an der Ein- bzw. Ausgangsseite des Filters F2 angeordnet. Der erste Drucksensor P1 ist somit stromauf des Filters F2 angeordnet. Der zweite Drucksensor P2 ist stromab des Filters F2 angeordnet. Der Temperatursensor T1 ist stromab des Filters F2 angeordnet. Diese Sensoren gemeinsam mit dem Filter F2 bilden die Messstelle M der zweiten Ausführungsform. Zwischen der Verdünnungsluftzufuhr der gesamten Anlage und der Abgaszufuhr E1 ist somit nur das eine Strömungselement (bzw. Filter F2 mit laminarer Strömung) vorgesehen, zum Filtern der Verdünnungsluft und gleichzeitigen Bestimmung des Durchflusses der Verdünnungsluft 1.

Die zweite Ausführungsform ermöglicht somit eine noch einfachere Ausgestaltung der Abgasmessanlage.

Wie voranstehend erläutert, kann die vorliegende Erfindung eine sehr vorteilhafte, vereinfachte und genaue Abgasmessanlage realisieren, da die abgegebene Gasmenge des Fahrzeugs über eine Messstelle M bestimmt wird, welche im Zufuhrbereich der Verdünnungsluft angeordnet ist, bevor diese mit dem Abgas vermischt wird.

## Patentansprüche

1. Anlage zur Entnahme von Abgasproben, insbesondere von Kraftfahrzeug-Brennkraftmaschinen, mittels einer Verdünnungsluftanlage bei der Abgas (2) mit Verdünnungsluft (1) gemischt wird, wobei die Anlage eine Constant Volume Sampling-Anlage ist, umfassend:
- einen Tunnel (3) der von Fluid durchströmbar ist, wobei der Tunnel (3) ein Verdünnungstunnel ist;
- ein Gasfördermittel (G1) zur Erzeugung eines Fluidstroms im Tunnel (3);
- eine Abgaseinleitung (E1) zur Zufuhr von Abgas (2); und
- eine Venturidüse (V) welche mit kritischer Strömung eingesetzt wird, zum Einstellen eines konstanten Gesamtvolumenstroms , wobei sich der konstante Gesamtvolumenstrom aus der Addition des Volumenstroms der Verdünnungsluft und des Volumenstroms des Abgases ergibt;
wobei
eine Messstelle (M), zur Ermittlung des Volumenstroms der zugeführten Verdünnungsluft (1), stromauf der Abgaseinleitung (E1) vorgesehen ist, und
ein Bestimmungsmittel vorgesehen ist, welches dazu eingerichtet ist die zugeführte Abgasmenge aus dem durch die Venturidüse (V) konstant gehaltenen Gesamtvolumenstrom abzüglich des an der Messstelle (M) ermittelten zugeführten Verdünnungsluftstroms zu bestimmen,
wobei die Venturidüse (V) stromauf des Gasfördermittels (G1) angeordnet ist; und
ein erstes Strömungselement stromaufwärts der Venturidüse (V) und stromaufwärts der Abgaseinleitung (E1) an der Messstelle (M) angeordnet ist; und
die Messstelle (M) Drucksensoren (P1, P2) zur Bestimmung des Differenzdrucks vor und nach dem ersten Strömungselement aufweist.

2. Anlage zur Entnahme von Abgasproben nach Anspruch 1, wobei das erste Strömungselement derart ausgestaltet ist, dass dieses von Gas, wobei das Gas Verdünnungsluft (1) ist, laminar durchströmbar ist, sodass im Betrieb der Anlage, im ersten Strömungselement, laminare Strömung vorliegt.

3. Anlage zur Entnahme von Abgasproben nach Anspruch 2, wobei das erste Strömungselement ein Laminar Flow-Element (L) ist.

4. Anlage zur Entnahme von Abgasproben nach zumindest einem der vorhergehenden Ansprüche , wobei das erste Strömungselement ein Verdünnungsluftfilter (F1, F2) ist der an einer Verdünnungslufteinleitung der Anlage vorgesehen ist und die Messstelle (M) im Bereich des Verdünnungsluftfilter (F1, F2) angeordnet ist.

5. Anlage zur Entnahme von Abgasproben nach Anspruch 1, wobei Konditionierungsmittel vorgesehen sind um die Gastemperatur in der Venturidüse (V) konstant zu halten, sodass aus dem konstanten Volumenstrom ein konstanter GasMassenstrom ermittelbar ist.

6. Anlage zur Entnahme von Abgasproben nach zumindest einem der vorhergehenden Ansprüche, wobei die Messstelle (M) zur Ermittlung des Volumenstroms der zugeführten Verdünnungsluft (1) stromauf der Abgaszufuhr (E1) entlang des zugeführten Verdünnungsluftstroms vorgesehen ist.

7. Anlage zur Entnahme von Abgasproben nach zumindest einem der vorhergehenden Ansprüche, wobei aus dem ermittelten Volumenstrom und einer Temperatur und eines Drucks der zugeführten Verdünnungsluft (1) ein Massenstrom ermittelt wird.

8. Verfahren zur Bestimmung einer Abgasmenge welche einer Anlage zur Entnahme von Abgasproben nach zumindest einem der vorhergehenden Ansprüche zugeführt wird, umfassend die Schritte:
- Ermittlung des Volumenstroms der zugeführten Verdünnungsluft (1) an der Messstelle (M);
- Ermittlung der abgegebenen Abgasmenge aus der Differenz des Gesamtvolumenstroms und des ermittelten Volumenstroms der zugeführten Verdünnungsluft (1).

## Claims

1. An apparatus for sampling exhaust gases, in particular from internal combustion engines of motor vehicles, by means of a dilution air system, in which exhaust gas (2) is mixed with dilution air (1), wherein
the apparatus is a constant volume sampling system, comprising:
- a tunnel (3) which has fluid passing through it, the tunnel (3) being a dilution tunnel,
- a gas conveying means (G1) for generating a fluid flow in the tunnel (3),
- an exhaust gas inlet (E1) for supplying exhaust gas (2), and
- a venturi nozzle (V) which is used with critical flow, for setting a constant total volume flow, wherein the constant total volume flow results from the addition of the volume flow of the dilution air and the volume flow of the exhaust gas, wherein
a measuring point (M), for determining the volumetric flow rate of the dilution air (1) which is supplied, is provided upstream of the exhaust gas inlet (E1), and
a determining means is provided, which is adapted to determine the exhaust gas quantity supplied from the constant total volume which is kept constant by the Venturi nozzle (V) minus the dilution air flow which is supplied and which is determined at the measuring point (M), wherein
the venturi nozzle (V) is arranged upstream of the gas conveying means (G1), and
a first flow element is arranged upstream of the venturi nozzle (V) and upstream of the exhaust gas inlet (E1) at the measuring point (M), and wherein
the measuring point (M) comprises pressure sensors (P1, P2) for determining the differential pressure upstream and downstream of the first flow element.

2. The apparatus for sampling exhaust gases according to claim 1, wherein
the first flow element is formed in such a way that gas, which is dilution air (1), is able to flow laminarly through it, so that during operation of the apparatus, laminar flow is present in the first flow element.

3. The apparatus for sampling exhaust gases according to claim 2, wherein
the first flow element is a laminar flow element (L).

4. The apparatus for sampling exhaust gases according to at least one of the preceding claims, wherein
the first flow element is a dilution air filter (F1, F2) which is provided at a dilution air inlet of the apparatus and the measuring point (M) is arranged in a region of the dilution air filter (F1, F2).

5. The apparatus for sampling exhaust gases according to claim 1, wherein
conditioning means are provided to keep the gas temperature in the venturi nozzle (V) constant, so that a constant gas mass flow is determined from the constant volume flow.

6. The apparatus for sampling exhaust gases according to at least one of the preceding claims, wherein
the measuring point (M) for determining the volumetric flow of the dilution air (1) that is supplied is provided upstream of the exhaust gas supply (E1) along the dilution air flow that is being supplied.

7. The apparatus for sampling exhaust gases according to at least one of the preceding claims, wherein
a mass flow rate is determined from the volume flow rate that is being determined and a temperature and a pressure of the dilution air (1) that is being supplied.

8. A method for determining an exhaust gas quantity which is supplied to an apparatus for sampling exhaust gases according to at least one of the preceding claims, comprising the steps of:
- determining the volumetric flow rate of the dilution air (1) supplied at the measuring point (M),
- determining the discharged exhaust gas quantity from the difference between the constant total volume and the determined volume flow of the supplied dilution air (1).

## Revendications

1. Installation de prélèvement d'échantillons de gaz d'échappement, en particulier de moteurs à combustion interne de véhicules automobiles, au moyen d'une installation d'air de dilution dans laquelle les gaz d'échappement (2) sont mélangés à de l'air de dilution (1), l'installation étant une installation d'échantillonnage à volume constant, comprenant :
- un tunnel (3) susceptible d'être traversé par un fluide, le tunnel (3) étant un tunnel de dilution ;
- un moyen de transport de gaz (G1) pour produire un flux de fluide dans le tunnel (3) ;
- une entrée de gaz d'échappement (E1) pour amener les gaz d'échappement (2) ; et
- un venturi (V) à écoulement critique pour régler un flux volumique total constant, le flux volumique total constant résultant de l'addition du flux volumique de l'air de dilution et du flux volumique des gaz d'échappement ;
dans laquelle
il est prévu un emplacement de mesure (M) pour déterminer le flux volumique de l'air de dilution (1) amené, en amont de l'entrée de gaz d'échappement (E1), et
il est prévu un moyen de détection conçu pour détecter la quantité de gaz d'échappement amenée à partir du flux volumique total, maintenu constant par le venturi (V), déduction faite du flux d'air de dilution amené, déterminé à l'emplacement de mesure (M),
le venturi (V) étant disposé en amont du moyen de transport de gaz (G1) ; et
il est prévu un premier élément d'écoulement, disposé en amont du venturi (V) et en amont de l'entrée de gaz d'échappement (E1), à l'emplacement de mesure (M) ; et
l'emplacement de mesure (M) comprend des capteurs de pression (P1, P2) pour détecter la pression différentielle en amont et en aval du premier élément d'écoulement.

2. Installation de prélèvement d'échantillons de gaz d'échappement selon la revendication 1,
dans laquelle le premier élément d'écoulement est conçu de manière à pouvoir être traversé de manière laminaire par du gaz, le gaz étant de l'air de dilution (1), de sorte que, pendant le fonctionnement de l'installation, il existe un écoulement laminaire dans le premier élément d'écoulement.

3. Installation de prélèvement d'échantillons de gaz d'échappement selon la revendication 2,
dans laquelle le premier élément d'écoulement est un élément d'écoulement laminaire (L).

4. Installation de prélèvement d'échantillons de gaz d'échappement selon l'une au moins des revendications précédentes,
dans laquelle le premier élément d'écoulement est un filtre à air de dilution (F1, F2) qui est prévu au niveau d'une entrée d'air de dilution de l'installation, et l'emplacement de mesure (M) est disposé dans la zone du filtre à air de dilution (F1, F2).

5. Installation de prélèvement d'échantillons de gaz d'échappement selon la revendication 1,
dans laquelle il est prévu des moyens de conditionnement pour maintenir constante la température des gaz dans le venturi (V), de sorte qu'un flux de gaz massique constant peut être déterminé à partir du flux volumique constant.

6. Installation de prélèvement d'échantillons de gaz d'échappement selon l'une au moins des revendications précédentes,
dans laquelle l'emplacement de mesure (M) pour déterminer le flux volumique de l'air de dilution amené (1) est prévu en amont de l'entrée de gaz d'échappement (E1) le long du flux d'air de dilution amené.

7. Installation de prélèvement d'échantillons de gaz d'échappement selon l'une au moins des revendications précédentes,
dans laquelle un flux massique est déterminé à partir du flux volumique déterminé et d'une température et d'une pression de l'air de dilution (1) amené.

8. Procédé de détection d'une quantité de gaz d'échappement, amenée à une installation de prélèvement d'échantillons de gaz d'échappement selon l'une au moins des revendications précédentes, comprenant les étapes consistant à :
- déterminer le flux volumique de l'air de dilution amené (1) à l'emplacement de mesure (M) ;
- déterminer la quantité de gaz d'échappement délivrée à partir de la différence entre le flux volumique total et le flux volumique déterminé de l'air de dilution (1) amené.
